# EUROPEAN PATENT SPECIFICATION

(11) **EP 4 233 223 B1**
(45) Date of publication and mention of the grant of the patent: **22.07.2026**
(21) Application number: 21801668.1
(22) Date of filing: 22.10.2021
(51) Int. Cl.: H04L 1/00, H04L 5/00

(54) **ENABLING 1024-QAM FOR NR PDSCH**
AKTIVIERUNG VON 8024-QAM FÜR NRPDSCH
ACTIVATION DE 1024-QAM POUR NR PDSCH

(30) Priority: 23.10.2020 US 202063104938 P
(43) Date of publication of application: 30.08.2023
(73) Proprietor: Telefonaktiebolaget LM Ericsson (publ), 164 83 Stockholm (SE)
(72) Inventor: NIMBALKER, Ajit, Dublin, California, 94568 (US); UESAKA, Kazuyoshi, KAWASAKI, Kanagawa 215--0031 (JP)
(74) Representative: Ericsson
(86) International application number: PCT/SE2021/051060
(87) International publication number: WO 2022/086425

(56) References cited:
- EP-A1- 3 462 654
- US-A1- 2019 215 095
- ERICSSON: "1024-QAM for NR DL", vol. RAN WG1, no. Online; 20201026 - 20201113, 24 October 2020 (2020-10-24), XP051946900, Retrieved from the Internet <URL:https://ftp.3gpp.org/tsg_ran/WG1_RL1/TSGR1_103-e/Docs/R1-2009209.zip R1-2009209 1024-QAM for NR DL.docx> [retrieved on 20201024]

## Description

### Technical Field

The present disclosure relates to the use of 1024-constellation Quadrature Amplitude Modulation (1024-QAM) in a cellular communications system.

### Background

New Radio (NR) standard in 3GPP is being designed to provide service for multiple use cases such as enhanced mobile broadband (eMBB), ultra-reliable and low-latency communication (URLLC), and machine-type communication (MTC). Each of these services has different technical requirements. For example, the general requirement for eMBB is high data rate with moderate latency and moderate coverage, while URLLC service requires a low latency and high reliability transmission but perhaps for moderate data rates.

One of the solutions for low latency data transmission is shorter transmission time intervals. In NR, in addition to transmission in a slot, a mini-slot transmission is also allowed to reduce latency. A mini-slot may consist of any number of 1 to 14 Orthogonal Frequency-Division Multiplexing (OFDM) symbols. It should be noted that the concepts of slot and mini-slot are not specific to a specific service (i.e., a mini-slot may be used for either eMBB, URLLC, or other services).

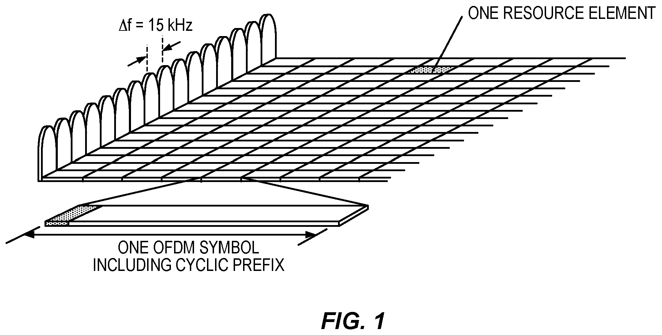

Figure 1 illustrates an exemplary radio resource in NR. NR supports enhanced data rate support via incorporation of advanced features including wider carrier bandwidths (up to 100 MHz in FR1, and up to 400 MHz in FR2), higher order Multiple Input Multiple Output (MIMO) (2, 4, or 8 layers for a User Equipment (UE) on the downlink, and up to 4 layers on the uplink), carrier aggregation of carriers in FR1 and/or FR2, and modulation orders such as 64-constellation Quadrature Amplitude Modulation (64-QAM) and 256-constellation Quadrature Amplitude Modulation (256-QAM).

Enabling 1024-constellation Quadrature Amplitude Modulation (256-QAM) (1024-QAM) can further increase peak throughputs and/or spectral efficiency. 1024-QAM can be used to enhance network and UE throughput in scenarios with sufficiently higher Signal-to-Interference-plus-Noise Ratio (SINR) and better channel conditions. Current NR releases (Rel-15/16) do not support 1024-QAM.

LTE Rel-15 specified support of 1024-QAM modulation for the downlink. The specification includes the description of 1024-QAM constellation, a Channel Quality Indicator (CQI) table corresponding to 1024-QAM, and a Modulation and Coding Scheme (MCS) table for 1024-QAM, which provides a mapping between an MCS index to modulation order and a transport block size (which is derived from a lookup table using a transport block size and Resource Block (RB) index). The specification also includes higher layer signalling via a parameter that enables use of 1024-QAM for Physical Downlink Shared Channel (PDSCH), which is assigned by a Physical Downlink Control Channel (PDCCH)/Enhanced PDCCH (EPDCCH) with Downlink Control Information (DCI) format 1/1B/1D/2/2A/2B/2C/2D with Cyclic Redundancy Check (CRC) scrambled by Cell Radio Network Temporary Identifier (C-RNTI). For example, Long Term Evolution (LTE) specifies a six-bit MCS table.

Unlike LTE, NR MCS table uses a mapping between an MCS index to modulation order and a coding rate. Thus, the LTE 1024-QAM MCS table cannot be directly reused for NR 1024-QAM design.

NR supports different non-fallback DCI formats such as 1-1 and 1-2, each of which may have separate configurations, including for fields and corresponding field sizes. In NR, downlink transport blocks are encoded using Low-Density Parity Check (LDPC) code, and each transport block is rate-matched based on a reference transport block size (known as TBS_{LBRM}) that is derived based on multiple higher layer signalling parameters, including a bandwidth (number of Physical Resource Blocks (PRBs)), a number of layers, a modulation order, and the like. This is specified in 3GPP Technical Specification (TS) 38.212 version 16.3.0, section 5.4.2.1.

In NR, phase tracking Reference Signal (RS) can be configured for uplink and downlink transmissions, and the time/frequency density is typically configured based on UE reported values (e.g., MCS index range and associated densities) based on the MCS table assumed using the maximum modulation order. For example, a Rel-15/16 UE may indicate this capability based on the 256-QAM MCS table if that UE supported 256-QAM for the band.

### Summary

The invention is defined by the subject-matter of the independent claims. Preferred embodiments are defined by the subject-matter of the dependent claims. Methods and apparatus are disclosed herein for enable 1024-constellation Quadrature Amplitude Modulation (1024-QAM) in cellular communication systems. Embodiments disclosed herein facilitate improved system performance by providing a single Modulation and Coding Scheme (MCS) table supporting 1024-QAM entries for New Radio (NR) containing the coding rate and modulation order. The possible usage of a separate Radio Network Temporary Identifier (RNTI) for indicating usage of 1024-QAM can reduce Downlink Control Information (DCI) payload size, while enabling the usage of multiple MCS tables (i.e., without or without 1024-QAM) with non-fallback DCI formats. The Limited Buffer Rate Matching (LBRM) solution improves system performance by allowing User Equipment (UE) to use a larger reference transport block size for rate-matching if 1024-QAM is enabled for at least one of the two non-fallback DCI formats (i.e., 1-1 and 1-2).

Embodiments of a method performed by a UE of a cellular communication system to enable 1024-QAM are disclosed herein. According to some embodiments disclosed herein, the method comprises receiving, from a network node, information for configuring the UE to monitor a PDCCH for a serving cell according to two (2) non-fallback DCI formats. The method further comprises receiving, from the network node, information for configuring the UE with a plurality of higher-layer parameters associated with the two (2) non-fallback DCI formats and indicating the enabling of a 1024-QAM MCS table for the serving cell. The method also comprises detecting a DCI format of the two (2) non-fallback DCI formats scheduling a PDSCH for the serving cell, wherein the DCI format comprises an MCS index. The method additionally comprises determining a transport block size (TBS) corresponding to the PDSCH using the MCS index and the 1024-QAM MCS table. The method further comprises determining a reference block size for LBRM for a transport block on the PDSCH based on a reference modulation order based on the plurality of higher-layer parameters associated with the two (2) non-fallback DCI formats. The method also comprises receiving the PDSCH on a Downlink (DL) Bandwidth Part (BWP). The method additionally comprises decoding the PDSCH based on the determined TBS and the determined reference block size for LBRM.

In some embodiments disclosed herein, a first parameter of the plurality of higher-layer parameters is associated with a first non-fallback DCI format of the two (2) non-fallback DCI formats, and a second parameter of the plurality of higher-layer parameters is associated with a second non-fallback DCI format of the two (2) non-fallback DCI formats. According to some embodiments disclosed herein, the first parameter and the second parameter are carried in a PDSCH-Config Information Element (IE). Some such embodiments disclosed herein provide that the plurality of higher-layer parameters comprises an mcs-Table1024qam parameter and an mcs-Table1024qam-DCI-1-2 parameter.

Embodiments of a UE are also disclosed herein. According to some embodiments disclosed herein, the UE comprises one or more transmitters, one or more receivers, and processing circuitry associated with the one or more transmitters and the one or more receivers. The processing circuitry is configured to cause the UE to receive, from a network node, information for configuring the UE to monitor a PDCCH for a serving cell according to two (2) non-fallback DCI formats. The processing circuitry is further configured to cause the UE to receive, from the network node, information for configuring the UE with a plurality of higher-layer parameters associated with the two (2) non-fallback DCI formats and indicating an enabling of a 1024-QAM MCS table for the serving cell. The processing circuitry is also configured to cause the UE to detect a DCI format of the two (2) non-fallback DCI formats scheduling a PDSCH for the serving cell, wherein the DCI format comprises an MCS index. The processing circuitry is additionally configured to cause the UE to determine a TBS corresponding to the PDSCH using the MCS index and the 1024-QAM MCS table. The processing circuitry is further configured to cause the UE to determine a reference block size for LBRM for a transport block on the PDSCH based on a reference modulation order based on the plurality of higher-layer parameters associated with the two (2) non-fallback DCI formats. The processing circuitry is also configured to cause the UE to receive the PDSCH on a DL BWP. The processing circuitry is additionally configured to cause the UE to decode the PDSCH based on the determined TBS and the determined reference block size for LBRM. In some embodiments disclosed herein, the processing circuitry is further configured to cause the UE to perform the steps of any of the above-disclosed methods attributed to the UE.

Embodiments of a UE are also disclosed herein. Some embodiments disclosed herein provide that the UE is adapted to receive, from a network node, information for configuring the UE to monitor a PDCCH for a serving cell according to two (2) non-fallback DCI formats. The UE is further adapted to receive, from the network node, information for configuring the UE with a plurality of higher-layer parameters associated with the two (2) non-fallback DCI formats and indicating an enabling of a 1024-QAM MCS table for the serving cell. The UE is also adapted to detect a DCI format of the two (2) non-fallback DCI formats scheduling a PDSCH for the serving cell, wherein the DCI format comprises an MCS index. The UE is additionally adapted to determine a TBS corresponding to the PDSCH using the MCS index and the 1024-QAM MCS table. The UE is further adapted to determine a reference block size for LBRM for a transport block on the PDSCH based on a reference modulation order based on the plurality of higher-layer parameters associated with the two (2) non-fallback DCI formats. The UE is also adapted to receive the PDSCH on a DL BWP. The UE is additionally adapted to decode the PDSCH based on the determined TBS and the determined reference block size for LBRM. According to some embodiments disclosed herein, the UE is further adapted to perform the steps of any of the above-disclosed methods attributed to the UE.

Embodiments of a method performed by a UE of a cellular communication system to enable 256-constellation Quadrature Amplitude Modulation (256-QAM) are also disclosed herein. In some embodiments disclosed herein, the method comprises receiving, from a network node, information for configuring the UE to monitor a PDCCH for a serving cell according to two (2) non-fallback DCI formats. The method further comprises receiving, from the network node, information for configuring the UE with a plurality of higher-layer parameters indicating the enabling of a 256-QAM MCS table for the serving cell. The method also comprises detecting a DCI format of the two (2) non-fallback DCI formats scheduling a PDSCH for the serving cell, wherein the DCI format comprises an MCS index. The method additionally comprises determining a TBS corresponding to the PDSCH using the MCS index and the 256-QAM MCS table. The method further comprises determining a reference block size for LBRM for a transport block on the PDSCH based on a reference modulation order based on the plurality of higher-layer parameters associated with the two (2) non-fallback DCI formats. The method also comprises receiving the PDSCH on a DL BWP. The method additionally comprises decoding the PDSCH based on the determined TBS and the determined reference block size for LBRM. Some embodiments disclosed herein provide that a first parameter of the plurality of higher-layer parameters is associated with a first non-fallback DCI format of the two (2) non-fallback DCI formats, and a second parameter of the plurality of higher-layer parameters is associated with a second non-fallback DCI format of the two (2) non-fallback DCI formats. According to some such embodiments disclosed herein, the plurality of higher-layer parameters comprises an mcs-Table parameter and an mcs-TableForDCI-Format1-2-r16 parameter.

Embodiments of a UE are also disclosed herein. In some embodiments disclosed herein, the UE comprises one or more transmitters, one or more receivers, and processing circuitry associated with the one or more transmitters and the one or more receivers. The processing circuitry is configured to cause the UE to receive, from a network node, information for configuring the UE to monitor a PDCCH for a serving cell according to two (2) non-fallback DCI formats. The processing circuitry is further configured to cause the UE to receive, from the network node, information for configuring the UE with a plurality of higher-layer parameters indicating an enabling of a 256-QAM MCS table for the serving cell. The processing circuitry is also configured to cause the UE to detect a DCI format of the two (2) non-fallback DCI formats scheduling a PDSCH for the serving cell, wherein the DCI format comprises an MCS index. The processing circuitry is additionally configured to cause the UE to determine a TBS corresponding to the PDSCH using the MCS index and the 256-QAM MCS table. The processing circuitry is further configured to cause the UE to determine a reference block size for LBRM for a transport block on the PDSCH based on a reference modulation order based on the plurality of higher-layer parameters associated with the two (2) non-fallback DCI formats. The processing circuitry is also configured to cause the UE to receive the PDSCH on a DL BWP. The processing circuitry is additionally configured to cause the UE to decode the PDSCH based on the determined TBS and the determined reference block size for LBRM. Some embodiments disclosed herein provide that the UE is further adapted to perform the steps of any of the above-disclosed methods attributed to the UE.

Embodiments of a UE are also disclosed herein. According to some embodiments disclosed herein, the UE is adapted to receive, from a network node, information for configuring the UE to monitor a PDCCH for a serving cell according to two (2) non-fallback DCI formats. The UE is further adapted to receive, from the network node, information for configuring the UE with a plurality of higher-layer parameters indicating an enabling of a 256-QAM MCS table for the serving cell. The UE is also adapted to detect a DCI format of the two (2) non-fallback DCI formats scheduling a PDSCH for the serving cell, wherein the DCI format comprises an MCS index. The UE is additionally adapted to determine a TBS corresponding to the PDSCH using the MCS index and the 256-QAM MCS table. The UE is further adapted to determine a reference block size for LBRM for a transport block on the PDSCH based on a reference modulation order based on the plurality of higher-layer parameters associated with the two (2) non-fallback DCI formats. The UE is also adapted to receive the PDSCH on a DL BWP. The UE is additionally adapted to decode the PDSCH based on the determined TBS and the determined reference block size for LBRM. In some embodiments disclosed herein, the UE is further adapted to perform the steps of any of the above-disclosed methods attributed to the UE.

Embodiments of a method performed by a UE of a cellular communication system to enable 1024-QAM are also disclosed herein. According to some embodiments disclosed herein, the method comprises receiving, from a network node, information for configuring the UE to monitor a Physical Downlink Control Channel (PDCCH) for a serving cell according to at least one (1) non-fallback DCI format. The method further comprises receiving, from the network node, information for configuring the UE with a higher-layer parameter indicating the enabling of a 1024-QAM MCS table for the serving cell. The method also comprises monitoring the PDCCH for the serving cell based on the at least one (1) non-fallback DCI format. The method additionally comprises detecting a DCI format of the at least one (1) non-fallback DCI format scheduling a Physical Downlink Shared Channel (PDSCH) for the serving cell, wherein the DCI format contains an MCS index. The method further comprises determining an MCS associated with the PDSCH using the 1024-QAM MCS table, based on the higher-layer parameter and the MCS index. The method also comprises decoding the PDSCH according to the determined MCS.

In some embodiments disclosed herein, the DCI format comprises one of DCI format 1-1 and DCI format 1-2. Some embodiments disclosed herein provide that determining the MCS associated with the PDSCH using the 1024-QAM MCS table comprises determining the MCS associated with the PDSCH using the 1024-QAM MCS table further based on the DCI format scheduling the PDSCH being scrambled with a RNTI associated with 1024-QAM. According to some such embodiments disclosed herein, the RNTI associated with 1024-QAM comprises a higher-order modulation Modulation and Coding Scheme Cell RNTI (hom-MCS-C-RNTI) that is distinct from a Cell RNTI (C-RNTI) a Modulation and Coding Scheme Cell RNTI (MCS-C-RNTI) and a Configured Scheduling RNTI (CS-RNTI) of the UE.

Embodiments of a UE are also disclosed herein. In some embodiments disclosed herein, the UE comprises one or more transmitters, one or more receivers, and processing circuitry associated with the one or more transmitters and the one or more receivers. The processing circuitry is configured to cause the UE to receive, from a network node, information for configuring the UE to monitor a PDCCH for a serving cell according to at least one (1) non-fallback DCI format. The processing circuitry is further configured to cause the UE to receive, from the network node, information for configuring the UE with a higher-layer parameter indicating an enabling of a 1024-QAM MCS table for the serving cell. The processing circuitry is also configured to cause the UE to monitor the PDCCH for the serving cell based on the at least one (1) non-fallback DCI format. The processing circuitry is additionally configured to cause the UE to detect a DCI format of the at least one (1) non-fallback DCI format scheduling a PDSCH for the serving cell, wherein the DCI format contains an MCS index. The processing circuitry is further configured to cause the UE to determine an MCS associated with the PDSCH using the 1024-QAM MCS table, based on the higher-layer parameter and the MCS index. The processing circuitry is also configured to cause the UE to decode the PDSCH according to the determined MCS. Some embodiments disclosed herein provide that the processing circuitry is further configured to cause the UE to perform the steps of any of the above-disclosed methods attributed to the UE.

Embodiments of a UE are also disclosed herein. According to some embodiments disclosed herein, the UE is adapted to receive, from a network node, information for configuring the UE to monitor a PDCCH for a serving cell according to at least one (1) non-fallback DCI format. The UE is further adapted to receive, from the network node, information for configuring the UE with a higher-layer parameter indicating an enabling of a 1024-QAM MCS table for the serving cell. The UE is also adapted to monitor the PDCCH for the serving cell based on the at least one (1) non-fallback DCI format. The UE is additionally adapted to detect a DCI format of the at least one (1) non-fallback DCI format scheduling a PDSCH for the serving cell, wherein the DCI format contains an MCS index. The UE is further adapted to determine an MCS associated with the PDSCH using the 1024-QAM MCS table, based on the higher-layer parameter and the MCS index. The UE is also adapted to decode the PDSCH according to the determined MCS. Some embodiments disclosed herein provide that the UE is further adapted to perform the steps of any of the above-disclosed methods attributed to the UE.

US 2019/215095 discloses a method of transmitting scheduling control information on a physical uplink shared channel by a base station. EP 3462 654 discloses a baseband circuitry configured to use 1024 quadrature amplitude modulation for wireless communication. Tdoc R1-2009209, relevant to Art. 54(3) EPC, "1024-QAM for NR DL" discloses a discussion of 1024-QAM constellation/CQI/MCS.

### Brief Description of the Drawings

The accompanying drawing figures incorporated in and forming a part of this specification illustrate several aspects of the disclosure, and together with the description serve to explain the principles of the disclosure.
Figure 1 illustrates an exemplary radio resource in New Radio (NR), according to some embodiments disclosed herein;
Figure 2 illustrates one example of a cellular communications system according to some embodiments disclosed herein;
Figures 3 and 4 illustrate example embodiments in which the cellular communication system of Figure 3 is a Fifth Generation (5G) System (5GS);
Figures 5A and 5B illustrate exemplary operations of a User Equipment (UE) to enable the use of 1024-constellation Quadrature Amplitude Modulation (1024-QAM) including Limited Buffer Rate Matching (LBRM), according to some embodiments disclosed herein;
Figure 6 illustrates exemplary operations of a UE to enable the use of 256-constellation Quadrature Amplitude Modulation (256-QAM) including LBRM, according to some embodiments disclosed herein;
Figure 7 illustrates exemplary operations of a UE to enable the use of 1024-QAM, according to some embodiments disclosed herein;
Figure 8 is a schematic block diagram of a radio access node, according to some embodiments disclosed herein;
Figure 9 is a schematic block diagram that illustrates a virtualized embodiment of the radio access node of Figure 8, according to some embodiments disclosed herein;
Figure 10 is a schematic block diagram of the radio access node of Figure 8, according to some other embodiments disclosed herein;
Figure 11 is a schematic block diagram of a UE, according to some embodiments disclosed herein; and
Figure 12 is a schematic block diagram of the UE of Figure 11, according to some other embodiments disclosed herein.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

There currently exist certain challenge(s) with existing approaches. In particular, the existing solutions specified in LTE 1024-QAM design cannot be fully reused for enabling of 1024-QAM for NR PDSCH, in particular related to aspects involving MCS table design and related signaling as well as handling of Limited-Buffer Rate Matching (LBRM) when 1024-QAM MCS table is selectively enabled for different non-fallback Downlink (DL) DCI formats (1-1 and 1-2).

Accordingly, the present disclosure and embodiments therein may provide solutions to the aforementioned or other challenges. There are, proposed herein, various embodiments which address one or more of the issues disclosed herein. In particular, this disclosure proposes the following in some embodiments:
- a new MCS table containing the 1024-QAM entries, including the possible usage a separate RNTI for indicating the usage of 1024-QAM table;
- handling of LBRM when 1024-QAM MCS table is selectively enabled for different non-fallback DL DCI formats (1-1 and 1-2); and/or
- a single MCS table supporting 1024-QAM entries for NR containing the coding rate and modulation order as shown in Table 1, including the possible usage of separate RNTI for indicating usage of 1024-QAM.

For 1024-QAM, determining TBS_{LBRM} may be based on a reference modulation order which is based on the plurality of higher-layer parameters associated with the first and second non-fallback DCI formats. A similar solution is applicable for 256-QAM as well.

Certain embodiments may provide one or more of the following technical advantage(s). In particular, the proposed solution facilitates improved system performance by providing a single MCS table supporting 1024-QAM entries for NR containing the coding rate and modulation order. The possible usage of separate RNTI for indicating usage of 1024-QAM can reduce DCI payload size, while enabling the usage of multiple MCS tables (i.e., without or without 1024-QAM) with non-fallback DCI formats. The LBRM solution improves system performance by allowing UE to use a larger reference transport block size for rate-matching if 1024-QAM is enabled for at least one of the two non-fallback DCI formats (i.e., 1-1 and 1-2).

Before discussing methods and apparatus for enabling 1024-QAM in cellular communication systems in greater detail, exemplary cellular communications systems in which some embodiments of the present disclosure may be implemented are first discussed. In this regard, the following terms are defined:
**Radio Node:** As used herein, a "radio node" is either a radio access node or a wireless communication device.
**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.
**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.
**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.
**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.
**Network Node:** As used herein, a "network node" is any node that is either part of the RAN or the core network of a cellular communications network/system.
**Transmission/Reception Point (TRP):** In some embodiments, a TRP may be either a network node, a radio head, a spatial relation, or a Transmission Configuration Indicator (TCI) state. A TRP may be represented by a spatial relation or a TCI state in some embodiments. In some embodiments, a TRP may be using multiple TCI states.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

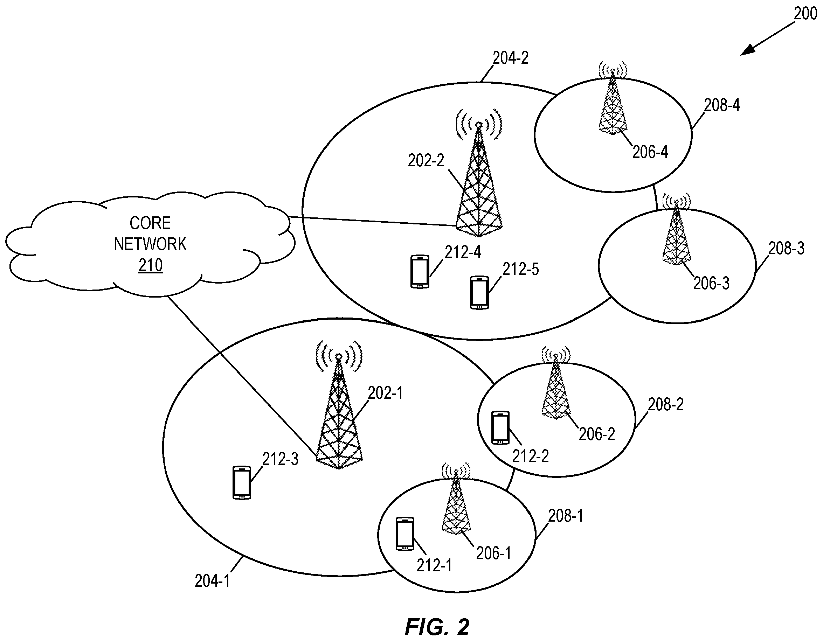

Figure 2 illustrates one example of a cellular communications system 200 in which embodiments of the present disclosure may be implemented. In the embodiments described herein, the cellular communications system 200 is a 5G system (5GS) including a Next Generation RAN (NG-RAN) and a 5G Core (5GC) or an Evolved Packet System (EPS) including an Evolved Universal Terrestrial RAN (E-UTRAN) and an Evolved Packet Core (EPC). In this example, the RAN includes base stations 202-1 and 202-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 204-1 and 204-2. The base stations 202-1 and 202-2 are generally referred to herein collectively as base stations 202 and individually as base station 202. Likewise, the (macro) cells 204-1 and 204-2 are generally referred to herein collectively as (macro) cells 204 and individually as (macro) cell 204. The RAN may also include a number of low power nodes 206-1 through 206-4 controlling corresponding small cells 208-1 through 208-4. The low power nodes 206-1 through 206-4 can be small base stations (such as pico or femto base stations) or Remote Radio Heads (RRHs), or the like. Notably, while not illustrated, one or more of the small cells 208-1 through 208-4 may alternatively be provided by the base stations 202. The low power nodes 206-1 through 206-4 are generally referred to herein collectively as low power nodes 206 and individually as low power node 206. Likewise, the small cells 208-1 through 208-4 are generally referred to herein collectively as small cells 208 and individually as small cell 208. The cellular communications system 200 also includes a core network 210, which in the 5G System (5GS) is referred to as the 5GC. The base stations 202 (and optionally the low power nodes 206) are connected to the core network 210.

The base stations 202 and the low power nodes 206 provide service to wireless communication devices 212-1 through 212-5 in the corresponding cells 204 and 208. The wireless communication devices 212-1 through 212-5 are generally referred to herein collectively as wireless communication devices 212 and individually as wireless communication device 212. In the following description, the wireless communication devices 212 are oftentimes UEs, but the present disclosure is not limited thereto.

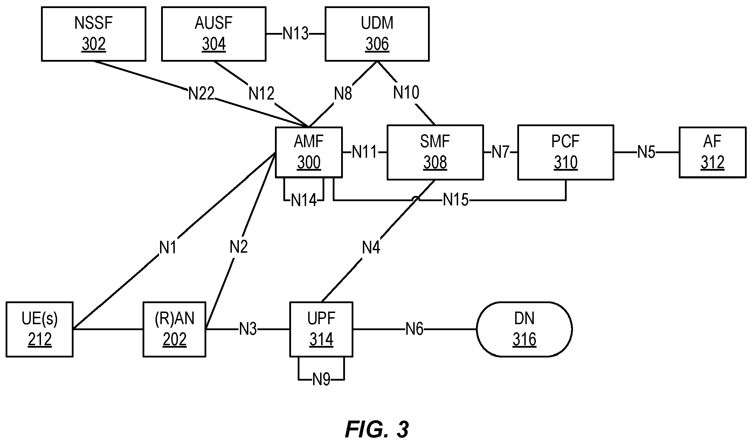

Figure 3 illustrates a wireless communication system represented as a 5G network architecture composed of core Network Functions (NFs), where interaction between any two NFs is represented by a point-to-point reference point/interface. Figure 3 can be viewed as one particular implementation of the system 200 of Figure 2.

Seen from the access side the 5G network architecture shown in Figure 3 comprises a plurality of UEs 212 connected to either a RAN 202 or an Access Network (AN) as well as an AMF 300. Typically, the R(AN) 202 comprises base stations, e.g., such as eNBs or gNBs or similar. Seen from the core network side, the 5GC NFs shown in Figure 3 include a NSSF 302, an AUSF 304, a UDM 306, the AMF 300, a SMF 308, a PCF 310, and an Application Function (AF) 312.

Reference point representations of the 5G network architecture are used to develop detailed call flows in the normative standardization. The N1 reference point is defined to carry signaling between the UE 212 and AMF 300. The reference points for connecting between the AN 202 and AMF 300 and between the AN 202 and UPF 314 are defined as N2 and N3, respectively. There is a reference point, N11, between the AMF 300 and SMF 308, which implies that the SMF 308 is at least partly controlled by the AMF 300. N4 is used by the SMF 308 and UPF 314 so that the UPF 314 can be set using the control signal generated by the SMF 308, and the UPF 314 can report its state to the SMF 308. N9 is the reference point for the connection between different UPFs 314, and N14 is the reference point connecting between different AMFs 300, respectively. N15 and N7 are defined since the PCF 310 applies policy to the AMF 300 and SMF 308, respectively. N12 is required for the AMF 300 to perform authentication of the UE 212. N8 and N10 are defined because the subscription data of the UE 212 is required for the AMF 300 and SMF 308.

The 5GC network aims at separating UP and CP. The UP carries user traffic while the CP carries signaling in the network. In Figure 3, the UPF 314 is in the UP and all other NFs, i.e., the AMF 300, SMF 308, PCF 310, AF 312, NSSF 302, AUSF 304, and UDM 306, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and a Data Network (DN) 316 (which provides Internet access, operator services, and/or the like) for some applications requiring low latency.

The core 5G network architecture is composed of modularized functions. For example, the AMF 300 and SMF 308 are independent functions in the CP. Separated AMF 300 and SMF 308 allow independent evolution and scaling. Other CP functions like the PCF 310 and AUSF 304 can be separated as shown in Figure 3. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

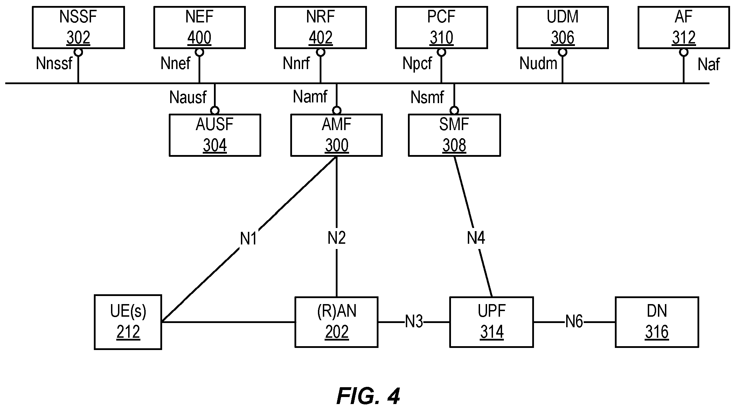

Figure 4 illustrates a 5G network architecture using service-based interfaces between the NFs in the CP, instead of the point-to-point reference points/interfaces used in the 5G network architecture of Figure 3. However, the NFs described above with reference to Figure 3 correspond to the NFs shown in Figure 4. The service(s) etc. that a NF provides to other authorized NFs can be exposed to the authorized NFs through the service-based interface. In Figure 4 the service based interfaces are indicated by the letter "N" followed by the name of the NF, e.g., Namf for the service based interface of the AMF 300 and Nsmf for the service based interface of the SMF 308, etc. The NEF 400 and the NRF 402 in Figure 4 are not shown in Figure 3 discussed above. However, it should be clarified that all NFs depicted in Figure 3 can interact with the NEF 400 and the NRF 402 of Figure 4 as necessary, though not explicitly indicated in Figure 3.

Some properties of the NFs shown in Figures 3 and 4 may be described in the following manner. The AMF 300 provides UE-based authentication, authorization, mobility management, etc. A UE 212 even using multiple access technologies is basically connected to a single AMF 300 because the AMF 300 is independent of the access technologies. The SMF 308 is responsible for session management and allocates Internet Protocol (IP) addresses to UEs. It also selects and controls the UPF 314 for data transfer. If a UE 212 has multiple sessions, different SMFs 308 may be allocated to each session to manage them individually and possibly provide different functionalities per session. The AF 312 provides information on the packet flow to the PCF 310 responsible for policy control in order to support QoS. Based on the information, the PCF 310 determines policies about mobility and session management to make the AMF 300 and SMF 308 operate properly. The AUSF 304 supports authentication function for UEs or similar and thus stores data for authentication of UEs or similar while the UDM 306 stores subscription data of the UE 212. The Data Network (DN) 316, not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

Embodiments for enabling 1024-QAM for NR PDSCH are now discussed. A UE, such as one of the wireless communication devices 212-1 through 212-5 of Figure 2, is configured to monitor PDCCH for a serving cell based on at least one non-fallback DCI (DCI format 1-1 or 1-2). The UE is configured with a higher-layer parameter indicating the enabling of 1024-QAM MCS table for the serving cell. The UE detects DCI format scheduling PDSCH for the serving cell, the DCI format containing an MCS index. The detected DCI format can be one of DCI format 1-1, DCI format 1-2.

The UE determines MCS associated with the PDSCH using a 1024-QAM MCS table. The UE processes and decodes the PDSCH according to the determined MCS.

The UE determines MCS associated with the PDSCH using a 1024-QAM MCS table when the DCI format scheduling PDSCH is scrambled with an RNTI associated with 1024-QAM (e.g., hom-MCS-C-RNTI).

The hom-MCS-C-RNTI is distinct from the UE's C-RNTI, MCS-C-RNTI, and CS-RNTI.

The UE determines the MCS associated with the PDSCH using an MCS table other than the 1024-QAM MCS table if the DCI format scheduling PDSCH is scrambled with an RNTI other than 1024-QAM (i.e., hom-MCS-C-RNTI). The MCS table is given by table 1.

**Table 1. Proposed five-bit 1024-QAM MCS table.**

| MCS Index | Modulation Order Qm | Target code Rate R x [1024] | Spectral efficiency |
|---|---|---|---|
| 0 | 2 | 120 | 0.2344 |
| 1 | 2 | 193 | 0.377 |
| 2 | 2 | 449 | 0.877 |
| 3 | 4 | 378 | 1.4766 |
| 4 | 4 | 490 | 1.9141 |
| 5 | 4 | 616 | 2.4063 |
| 6 | 6 | 466 | 2.7305 |
| 7 | 6 | 517 | 3.0293 |
| 8 | 6 | 567 | 3.3223 |
| 9 | 6 | 616 | 3.6094 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.332 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 806 | 7.8692 |
| 24 | 10 | 853 | 8.3321 |
| 25 | 10 | 900.5 | 8.79495 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

### LBRM for 1024-QAM

A UE is configured to monitor PDCCH for a serving cell based on two non-fallback DCI formats. The UE is configured with a plurality of higher-layer parameters (e.g., two) indicating the enabling of 1024-QAM MCS table for the serving cell, wherein a first parameter is associated with the first non-fallback DCI format, and a second parameter is associated with the second non-fallback DCI format. The UE detects a DCI format scheduling PDSCH for the serving cell, the DCI format containing an MCS index. The UE determines a transport block size corresponding to the PDSCH using the MCS index and a MCS table.

For example, the higher-layer parameter mcs-Table1024qam (or mcs-Table-r17) can be set to 'true' to indicate enabling of 1024-QAM MCS table for DCI format 1-1.

For example, the higher-layer parameter mcs-Table1024qam-DCI-1-2 (or mcs-TableDCI-1-2-r17) can be set to 'true' to indicate enabling of 1024-QAM MCS table for DCI format 1-1.

These higher-layer parameters can be set in PDSCH-Config IE for each DL BWP separately.

The UE determines a reference block size for LBRM (TBS_{LBRM}) for the transport block on the PDSCH based on a reference modulation order which is based on the plurality of higher-layer parameters associated with the first and second non-fallback DCI formats. The higher-layer parameters can be mcs-Table1024qam (or mcs-Table-r17) and mcs-Table1024qam-DCI-1-2 (or mcs-TableDCI-1-2-r17). For example, the reference modulation order is given by Qm=10, if the higher-layer parameter mcs-Table1024qam (or mcs-Table-r17) or mcs-Table1024qam-DCI-1-2 (or mcs-TableDCI-1-2-r17) given by a pdsch-Config for at least one DL BWP of the serving cell is set to 'true'.

The PDSCH can be received on any DL BWP.

The UE decodes the PDSCH based on the determined TBS and reference block size for LBRM.

An example text change to subclause 5.4.2.1 of 38.212-g30 can be as follows in Table 2 (change shown in bold underline):

**Table 2**

| |
|---|
| **if the higher layer parameter *mcs-Table1024qam (or mcs-Table-r17)* or *mcs-Table1024qam-DCI-1-2 (or mcs-TableDCI-1-2-r17)* given by a *pdsch-Config* for at least one DL BWP of the serving cell is set to 'true', maximum** **modulation order** *Qₘ* = 10 **is assumed for DL-SCH; else** if the higher layer parameter *mcs-Table* given by a *pdsch-Config* for at least one DL BWP of the serving cell is set to 'qam256', maximum modulation order *Qₘ* = 8 is assumed for DL-SCH; otherwise a maximum modulation order *Qₘ* = 6 is assumed for DL-SCH; |

### LBRM fix for 256-QAM

In current Rel-16 specification, the LBRM may need to be improved for UE configured with 256-QAM and configured with DCI formats 1-1 and 1-2.

A UE is configured to monitor PDCCH for a serving cell based on two non-fallback DCI formats. The UE is configured with a plurality of higher-layer parameters (e.g., two) indicating the enabling of 256-QAM MCS table for the serving cell, wherein a first parameter is associated with the first non-fallback DCI format, and a second parameter is associated with the second non-fallback DCI format. The UE detects a DCI format scheduling PDSCH for the serving cell, the DCI format containing an MCS index. The UE determines a transport block size corresponding to the PDSCH using the MCS index and a MCS table.

For example, the higher-layer parameter *mcs-Table* can be set to 'qam256 to indicate enabling of 256-QAM MCS table for DCI format 1-1.

For example, the higher-layer parameter *mcs-TableForDCI-Format1-2-r16* (or *mcs-TableDCI-1-2-r17*) can be set to 'qam256 to indicate enabling of 256-QAM MCS table for DCI format 1-1.

These higher-layer parameters can be set in PDSCH-Config IE for each DL BWP separately.

The UE determines a reference block size for LBRM (TBS_{LBRM}) for the transport block on the PDSCH based on a reference modulation order which is based on the plurality of higher-layer parameters associated with the first and second non-fallback DCI formats. The higher-layer parameters can be *mcs-Table* and *mcs-TableForDCI-Format1-2-r16.* For example, the reference modulation order is given by Qm=8, if the higher-layer parameter *mcs-Table* or *mcs-TableForDCI-Format1-2-r16* (or *mcs-TableDCI-1-2-r17*) given by a pdsch-Config for at least one DL BWP of the serving cell is set to 'true'.

The PDSCH can be received on any DL BWP. The UE decodes the PDSCH based on the determined TBS and reference block size for LBRM.

An example text change to subclause 5.4.2.1 of 38.212-g30 can be as follows in Table 3 (change shown in bold underline):

**Table 3**

| |
|---|
| if the higher layer parameter *mcs-Table* **or *mcs-TableForDCI-Format1-2-r16 (or* *mcs-TableDCI-1-2-r17)*** given by a *pdsch-Config* for at least one DL BWP of the serving cell is set to 'qam256', maximum modulation order *Qₘ* = 8 is assumed for DL-SCH; otherwise a maximum modulation order *Qₘ* = 6 is assumed for DL-SCH; |

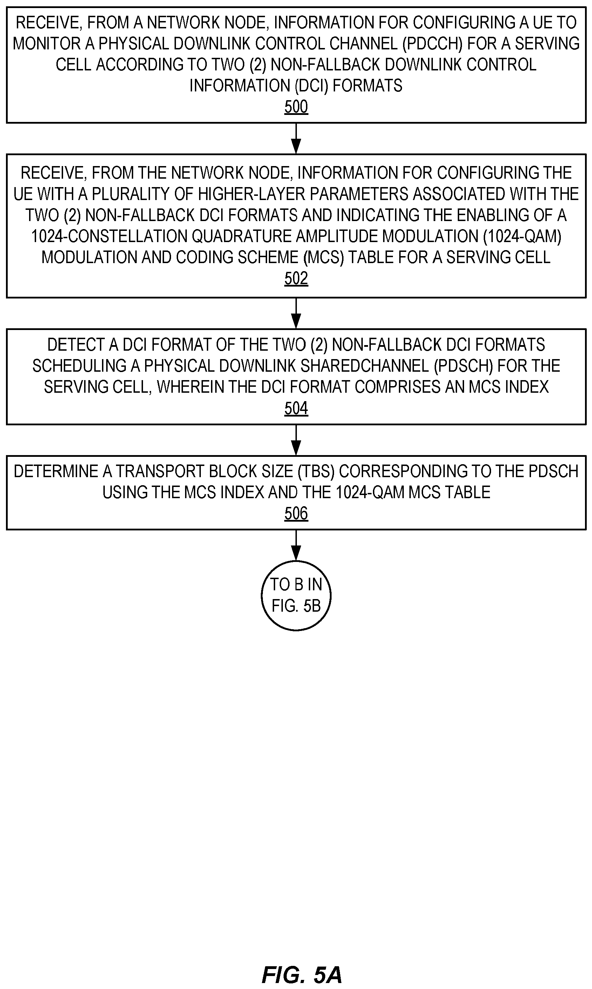

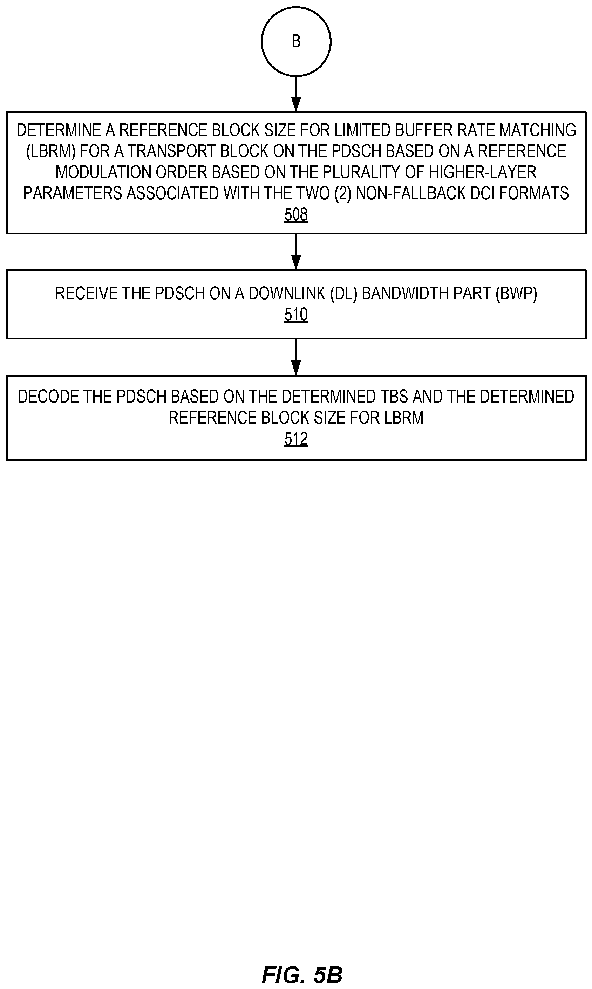

Figures 5A and 5B provide a flowchart illustrating exemplary operations of a UE to enable the use of 1024-QAM including LBRM, according to some embodiments disclosed herein. Operations begin in Figure 5A with the UE receives, from a network node (e.g., a base station), information that configures the UE to monitor a PDCCH for a serving cell according to two (2) non-fallback DCI formats (block 500). The UE further receives information from the network node that configures the UE with a plurality of higher-layer parameters associated with the two (2) non-fallback DCI formats and indicating the enabling of a 1024-QAM MCS table for a serving cell (block 502). In some embodiments, a first parameter of the plurality of higher-layer parameters is associated with a first non-fallback DCI format of the two non-fallback DCI formats, and a second parameter of the plurality of higher-layer parameters is associated with a second non-fallback DCI format of the two non-fallback DCI formats. The UE detects a DCI format of the two (2) non-fallback DCI formats scheduling a PDSCH for the serving cell, wherein the DCI format comprises an MCS index (block 504). The UE then determines a TBS corresponding to the PDSCH using the MCS index and the 1024-QAM MCS table (block 506). Note, in the example of Figures 5A and 5B, that the UE uses the 1024-QAM MCS table is used based on the detected DCI format being one of the two non-fallback DCI formats and the parameters indicating that the 1024-QAM MCS table is enabled for the serving cell. Operations then resume at block 508 of Figure 5B.

Turning now to Figure 5B, the UE next determines a reference block size for LBRM for a transport block on the PDSCH based on a reference modulation order based on the plurality of higher-layer parameters associated with the two (2) non-fallback DCI formats (block 508). The UE then receives the PDSCH on a DL BWP (block 510). Finally, the UE decodes the PDSCH based on the determined TBS and the determined reference block size for LBRM (block 512).

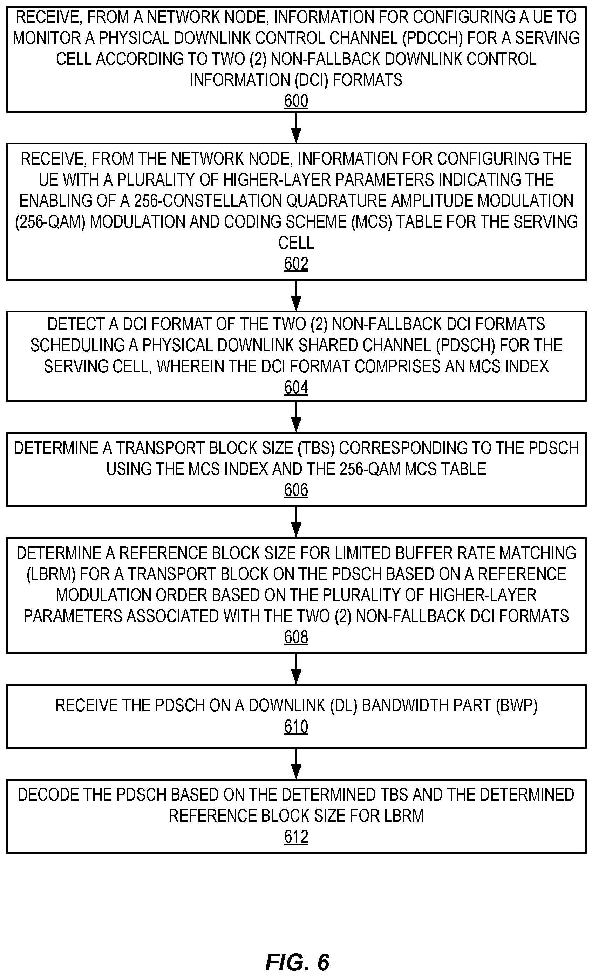

Figure 6 provides a flowchart illustrating exemplary operations of a UE to enable the use of 256-QAM including LBRM, according to some embodiments disclosed herein. In Figure 6, operations begin with the UE receiving information, from a network node (e.g., a base station), information that configures the UE to monitor a PDCCH for a serving cell according to two (2) non-fallback DCI formats (block 600). The UE also receives information from the network node that configures the UE with a plurality of higher-layer parameters indicating the enabling of a 256-QAM MCS table for the serving cell (block 602). In some embodiments, a first parameter of the plurality of higher-layer parameters is associated with a first non-fallback DCI format of the two non-fallback DCI formats, a second parameter of the plurality of higher-layer parameters is associated with a second non-fallback DCI format of the two non-fallback DCI formats. According to some such embodiments, the first parameter and the second parameter are carried in a PDSCH-Config IE. Some such embodiments may further provide that the plurality of higher-layer parameters comprises an mcs-Table parameter and an mcs-TableForDCI-Format1-2-r16 (or mcs-TableDCI-1-2-r17) parameter.

The UE next detects a DCI format of the two (2) non-fallback DCI formats scheduling a PDSCH for the serving cell, wherein the DCI format comprises an MCS index (block 604). The UE determines a TBS corresponding to the PDSCH using the MCS index and the 256-QAM MCS table (block 606). The UE then determines a reference block size for LBRM for a transport block on the PDSCH based on a reference modulation order based on the plurality of higher-layer parameters associated with the two (2) non-fallback DCI formats (block 608). The UE receives the PDSCH on a DL BWP (block 610). Finally, the UE decodes the PDSCH based on the determined TBS and the determined reference block size for LBRM (block 612).

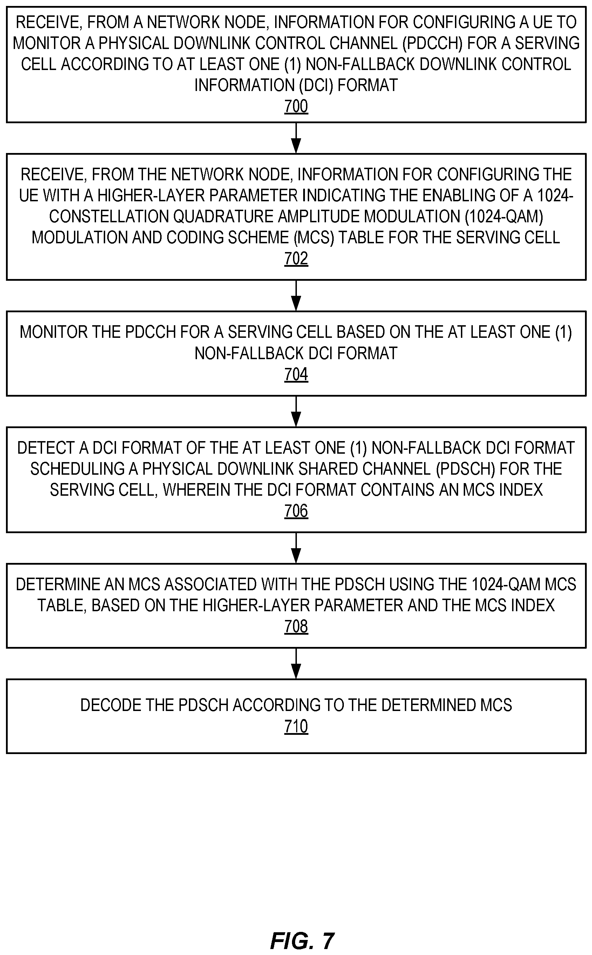

Figure 7 provides a flowchart illustrating exemplary operations of a UE to enable the use of 1024-QAM, according to some embodiments disclosed herein. In Figure 7, operations begin with the UE receiving, from a network node (e.g., a base station), information that configures the UE to monitor a PDCCH for a serving cell according to at least one (1) non-fallback DCI format (block 700). The UE further receives, from the network node, information that configures the UE with a higher-layer parameter indicating the enabling of a 1024-QAM MCS table for the serving cell (block 702). The UE monitors a PDCCH for a serving cell based on the at least one (1) non-fallback DCI (e.g., DCI format 1-1 or 1-2) (block 704). The UE next detects a DCI format of the at least one (1) non-fallback DCI format scheduling a PDSCH for the serving cell, wherein the DCI format contains an MCS index (block 706). The UE then determines an MCS associated with the PDSCH using the 1024-QAM MCS table, based on the higher-layer parameter and the MCS index (block 708). Note that, while not shown in Figure 7, some embodiments may provide that the UE also determines whether the DCI format scheduling the PDSCH is scrambled with an RNTI associated with 1024-QAM, and uses the 1024-QAM MCS table if so and a different MCS table if not. Finally, the UE decodes the PDSCH according to the determined MCS (block 710).

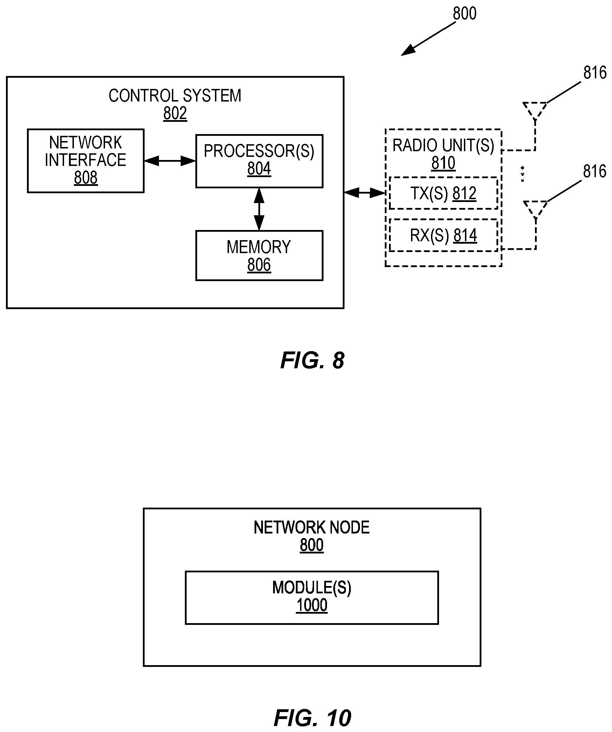

Figure 8 is a schematic block diagram of a network node 800 according to some embodiments of the present disclosure. Optional features are represented by dashed boxes. The network node 800 may be, for example, a base station 202 or 206 or a network node that implements all or part of the functionality of the base station 202 or gNB described herein. As illustrated, the network node 800 includes a control system 802 that includes one or more processors 804 (e.g., Central Processing Units (CPUs), Application Specific Integrated Circuits (ASICs), Field Programmable Gate Arrays (FPGAs), and/or the like), memory 806, and a network interface 808. The one or more processors 804 are also referred to herein as processing circuitry. In addition, the network node 800 may include one or more radio units 810 that each includes one or more transmitters 812 and one or more receivers 814 coupled to one or more antennas 816. The radio units 810 may be referred to or be part of radio interface circuitry. In some embodiments, the radio unit(s) 810 is external to the control system 802 and connected to the control system 802 via, e.g., a wired connection (e.g., an optical cable). However, in some other embodiments, the radio unit(s) 810 and potentially the antenna(s) 816 are integrated together with the control system 802. The one or more processors 804 operate to provide one or more functions of a network node 800 as described herein. In some embodiments, the function(s) are implemented in software that is stored, e.g., in the memory 806 and executed by the one or more processors 804.

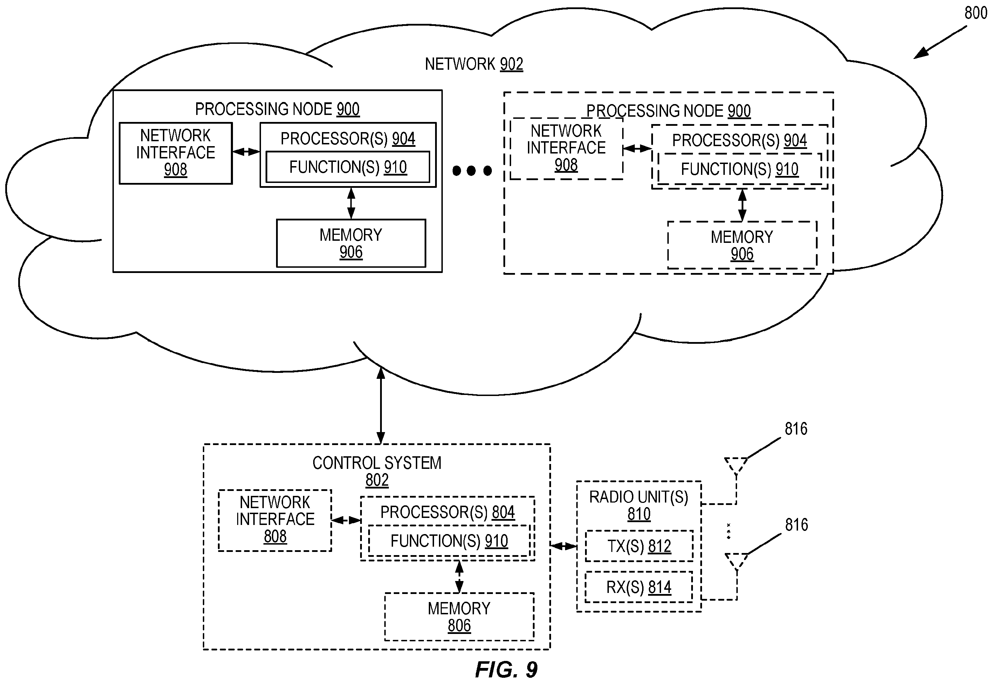

Figure 9 is a schematic block diagram that illustrates a virtualized embodiment of the network node 800 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the network node 800 in which at least a portion of the functionality of the network node 800 is implemented as a virtual component(s) (e.g., via a virtual machine(s) executing on a physical processing node(s) in a network(s)). As illustrated, in this example, the network node 800 may include the control system 802 and/or the one or more radio units 810, as described above. The control system 802 may be connected to the radio unit(s) 810 via, for example, an optical cable or the like. The network node 800 includes one or more processing nodes 900 coupled to or included as part of a network(s) 902. If present, the control system 802 or the radio unit(s) are connected to the processing node(s) 900 via the network 902. Each processing node 900 includes one or more processors 904 (e.g., CPUs, ASICs, FPGAs, and/or the like), memory 906, and a network interface 908.

In this example, functions 910 of the network node 800 described herein are implemented at the one or more processing nodes 900 or distributed across the one or more processing nodes 900 and the control system 802 and/or the radio unit(s) 810 in any desired manner. In some particular embodiments, some or all of the functions 910 of the network node 800 described herein are implemented as virtual components executed by one or more virtual machines implemented in a virtual environment(s) hosted by the processing node(s) 900. As will be appreciated by one of ordinary skill in the art, additional signaling or communication between the processing node(s) 900 and the control system 802 is used in order to carry out at least some of the desired functions 910. Notably, in some embodiments, the control system 802 may not be included, in which case the radio unit(s) 810 communicate directly with the processing node(s) 900 via an appropriate network interface(s).

In some embodiments, a computer program including instructions which, when executed by at least one processor, causes the at least one processor to carry out the functionality of network node 800 or a node (e.g., a processing node 900) implementing one or more of the functions 910 of the network node 800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 10 is a schematic block diagram of the network node 800 according to some other embodiments of the present disclosure. The network node 800 includes one or more modules 1000, each of which is implemented in software. The module(s) 1000 provide the functionality of the network node 800 described herein. This discussion is equally applicable to the processing node 900 of Figure 9 where the modules 1000 may be implemented at one of the processing nodes 900 or distributed across multiple processing nodes 900 and/or distributed across the processing node(s) 900 and the control system 802.

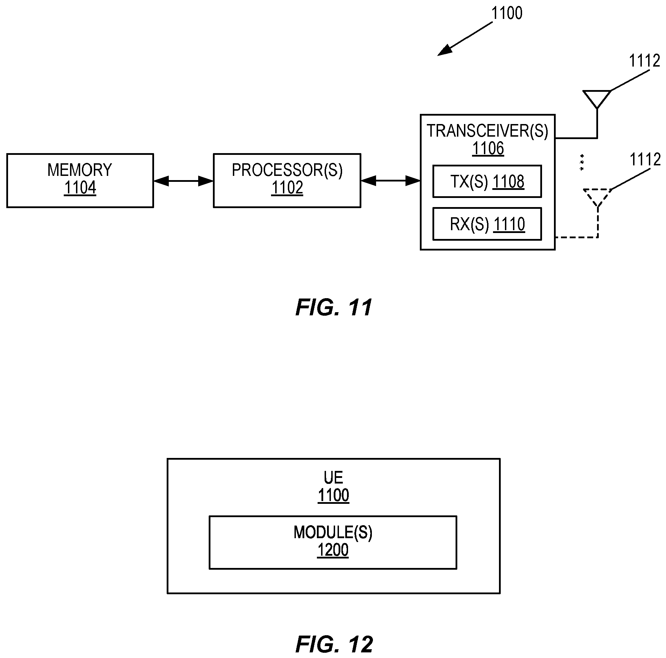

Figure 11 is a schematic block diagram of a wireless communication device 1100 according to some embodiments of the present disclosure. As illustrated, the wireless communication device 1100 includes one or more processors 1102 (e.g., CPUs, ASICs, FPGAs, and/or the like), memory 1104, and one or more transceivers 1106 each including one or more transmitters 1108 and one or more receivers 1110 coupled to one or more antennas 1112. The transceiver(s) 1106 includes radio-front end circuitry connected to the antenna(s) 1112 that is configured to condition signals communicated between the antenna(s) 1112 and the processor(s) 1102, as will be appreciated by on of ordinary skill in the art. The processors 1102 are also referred to herein as processing circuitry. The transceivers 1106 are also referred to herein as radio circuitry. In some embodiments, the functionality of the wireless communication device 1100 described above may be fully or partially implemented in software that is, e.g., stored in the memory 1104 and executed by the processor(s) 1102. Note that the wireless communication device 1100 may include additional components not illustrated in Figure 11 such as, e.g., one or more user interface components (e.g., an input/output interface including a display, buttons, a touch screen, a microphone, a speaker(s), and/or the like and/or any other components for allowing input of information into the wireless communication device 1100 and/or allowing output of information from the wireless communication device 1100), a power supply (e.g., a battery and associated power circuitry), etc.

In some embodiments, a computer program including instructions which, when executed by at least one processor, causes the at least one processor to carry out the functionality of the wireless communication device 1100 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 12 is a schematic block diagram of the wireless communication device 1100 according to some other embodiments of the present disclosure. The wireless communication device 1100 includes one or more modules 1200, each of which is implemented in software. The module(s) 1200 provide the functionality of the wireless communication device 1100 described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 1024-QAM | 1024-constellation Quadrature Amplitude Modulation |
| • 256-QAM | 256-constellation Quadrature Amplitude Modulation |
| • 3GPP | Third Generation Partnership Project |
| • 64-QAM | 64-constellation Quadrature Amplitude Modulation |
| • 5G | Fifth Generation |
| • 5GC | Fifth Generation Core |
| • 5GS | Fifth Generation System |
| • AF | Application Function |
| • AMF | Access and Mobility Function |
| • AN | Access Network |
| • AP | Access Point |
| • ASIC | Application Specific Integrated Circuit |
| • AUSF | Authentication Server Function |
| • BWP | Bandwidth Part |
| • CPU | Central Processing Unit |
| • CQI | Channel Quality Indicator |
| • CRC | Cyclic Redundancy Check |
| • C-RNTI | Cell Radio Network Temporary Identifier |
| • CS-RNTI | Configured Scheduling Radio Network Temporary Identifier |
| • DCI | Downlink Control Information |
| • DL | Downlink |
| • DN | Data Network |
| • DSP | Digital Signal Processor |
| • eMBB | Enhanced Mobile Broadband |
| • eNB | Enhanced or Evolved Node B |
| • EPDCCH | Enhanced Physical Downlink Control Channel |
| • EPS | Evolved Packet System |
| • E-UTRA | Evolved Universal Terrestrial Radio Access |
| • FPGA | Field Programmable Gate Array |
| • gNB | New Radio Base Station |
| • gNB-DU | New Radio Base Station Distributed Unit |
| • HSS | Home Subscriber Server |
| • hom-MCS-C-RNTI | higher-order modulation Modulation and Coding Scheme Cell Radio Network Temporary Identifier |
| • IoT | Internet of Things |
| • IP | Internet Protocol |
| • LBRM | Limited Buffer Rate Matching |
| • LDPC | Low-Density Parity Check |
| • LTE | Long Term Evolution |
| • MCS | Modulation and Coding Scheme |
| • MCS-C-RNTI | Modulation and Coding Scheme Cell Radio Network Temporary Identifier |
| • MME | Mobility Management Entity |
| • MTC | Machine-Type Communication |
| • NEF | Network Exposure Function |
| • NF | Network Function |
| • NR | New Radio |
| • NRF | Network Function Repository Function |
| • NSSF | Network Slice Selection Function |
| • OFDM | Orthogonal Frequency-Division Multiplexing |
| • OTT | Over-the-Top |
| • PC | Personal Computer |
| • PCF | Policy Control Function |
| • PDCCH | Physical Downlink Control Channel |
| • PDSCH | Physical Downlink Shared Channel |
| • P-GW | Packet Data Network Gateway |
| • PRB | Physical Resource Block |
| • QoS | Quality of Service |
| • RAM | Random Access Memory |
| • RB | Resource Block |
| • RAN | Radio Access Network |
| • RNTI | Radio Network Temporary Identifier |
| • ROM | Read Only Memory |
| • RRH | Remote Radio Head |
| • RS | Reference Signal |
| • RTT | Round Trip Time |
| • SCEF | Service Capability Exposure Function |
| • SINR | Signal-to-Interference-plus-Noise Ratio |
| • SMF | Session Management Function |
| • TBS | Transport Block Size |
| • TS | 3GPP Technical Specification |
| • UDM | Unified Data Management |
| • UE | User Equipment |
| • UPF | User Plane Function |
| • URLLC | Ultra-Reliable and Low-Latency Communication |

Those skilled in the art will recognize improvements and modifications to the embodiments of the present disclosure.

## Claims

1. A method performed by a User Equipment, UE, (1100) of a cellular communication system to enable 1024-constellation Quadrature Amplitude Modulation, 1024-QAM, the method comprising:
receiving (500), from a network node (800), information for configuring the UE to monitor a Physical Downlink Control Channel, PDCCH, for a serving cell according to two non-fallback Downlink Control Information, DCI, formats;
receiving (502), from the network node, information for configuring the UE with a plurality of higher-layer parameters associated with the two non-fallback DCI formats and indicating the enabling of a 1024-QAM Modulation and Coding Scheme, MCS, table for the serving cell;
detecting (504) a DCI format of the two non-fallback DCI formats scheduling a Physical Downlink Shared Channel, PDSCH, for the serving cell, wherein the DCI format comprises an MCS index;
determining (506) a transport block size, TBS, corresponding to the PDSCH using the MCS index and the 1024-QAM MCS table;
determining (508) a reference block size for Limited Buffer Rate Matching, LBRM, for a transport block on the PDSCH based on a reference modulation order based on the plurality of higher-layer parameters associated with the two non-fallback DCI formats;
receiving (510) the PDSCH on a Downlink, DL, Bandwidth Part, BWP; and
decoding (512) the PDSCH based on the determined TBS and the determined reference block size for LBRM.

2. The method of claim 1, wherein:
a first parameter of the plurality of higher-layer parameters is associated with a first non-fallback DCI format of the two non-fallback DCI formats; and
a second parameter of the plurality of higher-layer parameters is associated with a second non-fallback DCI format of the two non-fallback DCI formats.

3. The method of claim 2, wherein the first parameter and the second parameter are carried in a PDSCH-Config Information Element, IE.

4. The method of claim 2, wherein the plurality of higher-layer parameters comprises an mcs-Table1024qam parameter and an mcs-Table1024qam-DCI-1-2 parameter.

5. A User Equipment, UE, (1100), adapted to:
receive (500), from a network node (800), information for configuring the UE to monitor a Physical Downlink Control Channel, PDCCH, for a serving cell according to two non-fallback Downlink Control Information, DCI, formats;
receive (502), from the network node, information for configuring the UE with a plurality of higher-layer parameters associated with the two non-fallback DCI formats and indicating an enabling of a 1024-constellation Quadrature Amplitude Modulation, 1024-QAM, Modulation and Coding Scheme, MCS, table for the serving cell;
detect (504) a DCI format of the two non-fallback DCI formats scheduling a Physical Downlink Shared Channel, PDSCH, for the serving cell, wherein the DCI format comprises an MCS index;
determine (506) a transport block size, TBS, corresponding to the PDSCH using the MCS index and the 1024-QAM MCS table;
determine (508) a reference block size for Limited Buffer Rate Matching, LBRM, for a transport block on the PDSCH based on a reference modulation order based on the plurality of higher-layer parameters associated with the two non-fallback DCI formats;
receive (510) the PDSCH on a Downlink, DL, Bandwidth Part, BWP; and
decode (512) the PDSCH based on the determined TBS and the determined reference block size for LBRM.

6. The UE of claim 5, wherein the UE is further adapted to perform the method of any one of claims 2 to 4.

7. A method performed by a User Equipment, UE, (1100) of a cellular communication system to enable 256-constellation Quadrature Amplitude Modulation, 256-QAM, the method comprising:
receiving (600), from a network node (800), information for configuring the UE to monitor a Physical Downlink Control Channel, PDCCH, for a serving cell according to two non-fallback Downlink Control Information, DCI, formats;
receiving (602), from the network node, information for configuring the UE with a plurality of higher-layer parameters indicating the enabling of a 256-QAM Modulation and Coding Scheme, MCS, table for the serving cell;
detecting (604) a DCI format of the two non-fallback DCI formats scheduling a Physical Downlink Shared Channel, PDSCH, for the serving cell, wherein the DCI format comprises an MCS index;
determining (606) a transport block size, TBS, corresponding to the PDSCH using the MCS index and the 256-QAM MCS table;
determining (608) a reference block size for Limited Buffer Rate Matching, LBRM, for a transport block on the PDSCH based on a reference modulation order based on the plurality of higher-layer parameters associated with the two non-fallback DCI formats;
receiving (610) the PDSCH on a Downlink, DL, Bandwidth Part, BWP; and
decoding (612) the PDSCH based on the determined TBS and the determined reference block size for LBRM.

8. The method of claim 7, wherein:
a first parameter of the plurality of higher-layer parameters is associated with a first non-fallback DCI format of the two non-fallback DCI formats; and
a second parameter of the plurality of higher-layer parameters is associated with a second non-fallback DCI format of the two non-fallback DCI formats.

9. The method of claim 8, wherein the plurality of higher-layer parameters comprises an mcs-Table parameter and an mcs-TableForDCI-Format1-2-r16 parameter.

10. A User Equipment, UE, (1100), adapted to:
receive (600), from a network node (800), information for configuring the UE to monitor a Physical Downlink Control Channel, PDCCH, for a serving cell according to two non-fallback Downlink Control Information, DCI, formats;
receive (602), from the network node, information for configuring the UE with a plurality of higher-layer parameters indicating an enabling of a 256-constellation Quadrature Amplitude Modulation, 256-QAM, Modulation and Coding Scheme, MCS, table for the serving cell;
detect (604) a DCI format of the two non-fallback DCI formats scheduling a Physical Downlink Shared Channel, PDSCH, for the serving cell, wherein the DCI format comprises an MCS index;
determine (606) a transport block size, TBS, corresponding to the PDSCH using the MCS index and the 256-QAM MCS table;
determine (608) a reference block size for Limited Buffer Rate Matching, LBRM, for a transport block on the PDSCH based on a reference modulation order based on the plurality of higher-layer parameters associated with the two non-fallback DCI formats;
receive (610) the PDSCH on a Downlink, DL, Bandwidth Part, BWP; and
decode (612) the PDSCH based on the determined TBS and the determined reference block size for LBRM.

11. The UE of claim 10, wherein the UE is further adapted to perform the method of any one of claims 8 to 9.

## Patentansprüche

1. Verfahren, das von einer Benutzereinrichtung, UE, (1100) eines Mobilfunkkommunikationssystems durchgeführt wird, zur Aktivierung von 1024-Konstellations-Quadraturamplitudenmodulation, 1024-QAM, wobei das Verfahren Folgendes umfasst:
Empfangen (500) von Informationen von einem Netzwerkknoten (800) zum Konfigurieren der UE, um einen Physical Downlink Control Channel, PDCCH, für eine bedienende Zelle gemäß zwei Nicht-Fallback-Downlink Control Information-Formaten, Nicht-Fallback-DCI-Formaten, zu überwachen;
Empfangen (502) von Informationen von dem Netzwerkknoten zum Konfigurieren der UE mit einer Mehrzahl von Parametern der oberen Schichten, die mit den beiden Nicht-Fallback-DCI-Formaten assoziiert sind und die die Aktivierung einer 1024-QAM-Modulations- und -Codierungsschema-Tabelle, 1024-QAM-MCS-Tabelle, für die bedienende Zelle angeben;
Erkennen (504) eines DCI-Formats der beiden Nicht-Fallback-DCI-Formate, das einen Physical Downlink Shared Channel, PDSCH, für die bedienende Zelle disponiert, wobei das DCI-Format einen MCS-Index umfasst;
Bestimmen (506) einer Transportblockgröße, TBS, die dem PDSCH entspricht, unter Verwendung des MCS-Index und der 1024-QAM-MCS-Tabelle;
Bestimmen (508) einer Referenzblockgröße für begrenzte Pufferratenanpassung, LBRM, für einen Transportblock auf dem PDSCH basierend auf einer Referenzmodulationsordnung basierend auf der Mehrzahl von Parametern der oberen Schichten, die mit den beiden Nicht-Fallback-DCI-Formaten assoziiert sind;
Empfangen (510) des PDSCH auf einem Downlink-Bandbreitenteil, DL-BWP; und
Decodieren (512) des PDSCH basierend auf der bestimmten TBS und der bestimmten Referenzblockgröße für LBRM.

2. Verfahren nach Anspruch 1, wobei:
ein erster Parameter der Mehrzahl von Parametern der oberen Schichten mit einem ersten Nicht-Fallback-DCI-Format der beiden Nicht-Fallback-DCI-Formate assoziiert ist; und
ein zweiter Parameter der Mehrzahl von Parametern der oberen Schichten mit einem zweiten Nicht-Fallback-DCI-Format der beiden Nicht-Fallback-DCI-Formate assoziiert ist.

3. Verfahren nach Anspruch 2, wobei der erste Parameter und der zweite Parameter in einem PDSCH-Config-Informationselement, PDSCH-Config-IE, befördert werden.

4. Verfahren nach Anspruch 2, wobei die Mehrzahl von Parametern der oberen Schichten einen mcs-Table1024qam-Parameter und einen mcs-Table1024qam-DCl-1-2-Parameter umfasst.

5. Benutzereinrichtung, UE, (1100), die zu Folgendem ausgelegt ist:
Empfangen (500) von Informationen von einem Netzwerkknoten (800) zum Konfigurieren der UE, um einen Physical Downlink Control Channel, PDCCH, für eine bedienende Zelle gemäß zwei Nicht-Fallback-Downlink Control Information-Formaten, Nicht-Fallback-DCI-Formaten, zu überwachen;
Empfangen (502) von Informationen von dem Netzwerkknoten zum Konfigurieren der UE mit einer Mehrzahl von Parametern der oberen Schichten, die mit den beiden Nicht-Fallback-DCI-Formaten assoziiert sind und die eine Aktivierung einer 1024-Konstellations-Quadraturamplitudenmodulations-,1024-QAM-,Modulations- und -Codierungsschema-,MCS-,Tabelle, für die bedienende Zelle angeben;
Erkennen (504) eines DCI-Formats der beiden Nicht-Fallback-DCI-Formate, das einen Physical Downlink Shared Channel, PDSCH, für die bedienende Zelle disponiert, wobei das DCI-Format einen MCS-Index umfasst;
Bestimmen (506) einer Transportblockgröße, TBS, die dem PDSCH entspricht, unter Verwendung des MCS-Index und der 1024-QAM-MCS-Tabelle;
Bestimmen (508) einer Referenzblockgröße für begrenzte Pufferratenanpassung, LBRM, für einen Transportblock auf dem PDSCH basierend auf einer Referenzmodulationsordnung basierend auf der Mehrzahl von Parametern der oberen Schichten, die mit den beiden Nicht-Fallback-DCI-Formaten assoziiert sind;
Empfangen (510) des PDSCH auf einem Downlink-Bandbreitenteil, DL-BWP; und
Decodieren (512) des PDSCH basierend auf der bestimmten TBS und der bestimmten Referenzblockgröße für LBRM.

6. UE nach Anspruch 5, wobei die UE ferner zum Durchführen des Verfahrens nach einem der Ansprüche 2 bis 4 ausgelegt ist.

7. Verfahren, das von einer Benutzereinrichtung, UE, (1100) eines Mobilfunkkommunikationssystems durchgeführt wird, zur Aktivierung von 256-Konstellations-Quadraturamplitudenmodulation, 256-QAM, wobei das Verfahren Folgendes umfasst:
Empfangen (600) von Informationen von einem Netzwerkknoten (800) zum Konfigurieren der UE, um einen Physical Downlink Control Channel, PDCCH, für eine bedienende Zelle gemäß zwei Nicht-Fallback-Downlink Control Information-Formaten, Nicht-Fallback-DCI-Formaten, zu überwachen;
Empfangen (602) von Informationen von dem Netzwerkknoten zum Konfigurieren der UE mit einer Mehrzahl von Parametern der oberen Schichten, die die Aktivierung einer 256-QAM-Modulations- und - Codierungsschema-Tabelle, 256-QAM-MCS-Tabelle, für die bedienende Zelle angeben;
Erkennen (604) eines DCI-Formats der beiden Nicht-Fallback-DCI-Formate, das einen Physical Downlink Shared Channel, PDSCH, für die bedienende Zelle disponiert, wobei das DCI-Format einen MCS-Index umfasst;
Bestimmen (606) einer Transportblockgröße, TBS, die dem PDSCH entspricht, unter Verwendung des MCS-Index und der 256-QAM-MCS-Tabelle;
Bestimmen (608) einer Referenzblockgröße für begrenzte Pufferratenanpassung, LBRM, für einen Transportblock auf dem PDSCH basierend auf einer Referenzmodulationsordnung basierend auf der Mehrzahl von Parametern der oberen Schichten, die mit den beiden Nicht-Fallback-DCI-Formaten assoziiert sind;
Empfangen (610) des PDSCH auf einem Downlink-Bandbreitenteil, DL-BWP; und
Decodieren (612) des PDSCH basierend auf der bestimmten TBS und der bestimmten Referenzblockgröße für LBRM.

8. Verfahren nach Anspruch 7, wobei:
ein erster Parameter der Mehrzahl von Parametern der oberen Schichten mit einem ersten Nicht-Fallback-DCI-Format der beiden Nicht-Fallback-DCI-Formate assoziiert ist; und
ein zweiter Parameter der Mehrzahl von Parametern der oberen Schichten mit einem zweiten Nicht-Fallback-DCI-Format der beiden Nicht-Fallback-DCI-Formate assoziiert ist.

9. Verfahren nach Anspruch 8, wobei die Mehrzahl von Parametern der oberen Schichten einen mcs-Table-Parameter und einen mcs-TableForDCI-Format1-2-r16-Parameter umfassen.

10. Benutzereinrichtung, UE, (1100), die zu Folgendem ausgelegt ist:
Empfangen (600) von Informationen von einem Netzwerkknoten (800) zum Konfigurieren der UE, um einen Physical Downlink Control Channel, PDCCH, für eine bedienende Zelle gemäß zwei Nicht-Fallback-Downlink Control Information-Formaten, Nicht-Fallback-DCI-Formaten, zu überwachen;
Empfangen (602) von Informationen von dem Netzwerkknoten zum Konfigurieren der UE mit einer Mehrzahl von Parametern der oberen Schichten, die eine Aktivierung einer 256-Konstellations-Quadraturamplitudenmodulations-,256-QAM-,Modulations- und -Codierungsschema-,MCS-,Tabelle, für die bedienende Zelle angeben;
Erkennen (604) eines DCI-Formats der beiden Nicht-Fallback-DCI-Formate, das einen Physical Downlink Shared Channel, PDSCH, für die bedienende Zelle disponiert, wobei das DCI-Format einen MCS-Index umfasst;
Bestimmen (606) einer Transportblockgröße, TBS, die dem PDSCH entspricht, unter Verwendung des MCS-Index und der 256-QAM-MCS-Tabelle;
Bestimmen (608) einer Referenzblockgröße für begrenzte Pufferratenanpassung, LBRM, für einen Transportblock auf dem PDSCH basierend auf einer Referenzmodulationsordnung basierend auf der Mehrzahl von Parametern der oberen Schichten, die mit den beiden Nicht-Fallback-DCI-Formaten assoziiert sind;
Empfangen (610) des PDSCH auf einem Downlink-Bandbreitenteil, DL-BWP; und
Decodieren (612) des PDSCH basierend auf der bestimmten TBS und der bestimmten Referenzblockgröße für LBRM.

11. UE nach Anspruch 10, wobei die UE ferner zum Durchführen des Verfahrens nach einem der Ansprüche 8 bis 9 ausgelegt ist.

## Revendications

1. Procédé réalisé par un équipement utilisateur, UE, (1100) d'un système de communication cellulaire pour activer une modulation d'amplitude en quadrature de constellation à 1024 états, 1024-QAM, le procédé comprenant :
la réception (500), depuis un nœud de réseau (800), d'informations pour configurer l'UE pour surveiller un canal de commande de liaison descendante physique, PDCCH, pour une cellule de desserte selon deux formats d'informations de commande de liaison descendante, DCI, sans repli ;
la réception (502), depuis le nœud de réseau, d'informations pour configurer l'UE avec une pluralité de paramètres de couche supérieure associés aux deux formats DCI sans repli et indiquer l'activation d'une table de schéma de modulation et de codage, MCS, 1024-QAM, pour la cellule de desserte ;
la détection (504) d'un format DCI des deux formats DCI sans repli planifiant un canal partagé de liaison descendante physique, PDSCH, pour la cellule de desserte, dans lequel le format DCI comprend un indice MCS ;
la détermination (506) d'une taille de bloc de transport, TBS, correspondant au PDSCH à l'aide de l'indice MCS et de la table MCS 1024-QAM ;
la détermination (508) d'une taille de bloc de référence pour une adaptation de débit à tampon limité, LBRM, pour un bloc de transport sur le PDSCH sur la base d'un ordre de modulation de référence basé sur la pluralité de paramètres de couche supérieure associés aux deux formats DCI sans repli ;
la réception (510) du PDSCH sur une partie de bande passante, BWP, de liaison descendante, DL ; et
le décodage (512) du PDSCH sur la base de la TBS déterminée et de la taille de bloc de référence déterminée pour la LBRM.

2. Procédé selon la revendication 1, dans lequel :
un premier paramètre de la pluralité de paramètres de couche supérieure est associé à un premier format DCI sans repli des deux formats DCI sans repli ; et
un deuxième paramètre de la pluralité de paramètres de couche supérieure est associé à un deuxième format DCI sans repli des deux formats DCI sans repli.

3. Procédé selon la revendication 2, dans lequel le premier paramètre et le deuxième paramètre sont portés dans un élément d'information, IE, PDSCH-Config.

4. Procédé selon la revendication 2, dans lequel la pluralité de paramètres de couche supérieure comprend un paramètre mcs-Table1024qam et un paramètre mcs-Table1024qam-DCI-1-2.

5. Equipement utilisateur, UE, (1100) adapté pour :
recevoir (500), depuis un nœud de réseau (800), des informations pour configurer l'UE pour surveiller un canal de commande de liaison descendante physique, PDCCH, pour une cellule de desserte selon deux formats d'informations de commande de liaison descendante, DCI, sans repli ;
recevoir (502), depuis le nœud de réseau, des informations pour configurer l'UE avec une pluralité de paramètres de couche supérieure associés aux deux formats DCI sans repli et indiquer une activation d'une table de schéma de modulation et de codage, MCS, de modulation d'amplitude en quadrature de constellation à 1024 états, 1024-QAM, pour la cellule de desserte ;
détecter (504) un format DCI des deux formats DCI sans repli planifiant un canal partagé de liaison descendante physique, PDSCH, pour la cellule de desserte, dans lequel le format DCI comprend un indice MCS ;
déterminer (506) une taille de bloc de transport, TBS, correspondant au PDSCH à l'aide de l'indice MCS et de la table MCS 1024-QAM ;
déterminer (508) une taille de bloc de référence pour une adaptation de débit à tampon limité, LBRM, pour un bloc de transport sur le PDSCH sur la base d'un ordre de modulation de référence basé sur la pluralité de paramètres de couche supérieure associés aux deux formats DCI sans repli ;
recevoir (510) le PDSCH sur une partie de bande passante, BWP, de liaison descendante, DL ; et
décoder (512) le PDSCH sur la base de la TBS déterminée et de la taille de bloc de référence déterminée pour la LBRM.

6. UE selon la revendication 5, dans lequel l'UE est en outre adapté pour réaliser le procédé selon l'une quelconque des revendications 2 à 4.

7. Procédé réalisé par un équipement utilisateur, UE, (1100) d'un système de communication cellulaire pour activer une modulation d'amplitude en quadrature de constellation à 256 états, 256-QAM, le procédé comprenant :
la réception (600), depuis un nœud de réseau (800), d'informations pour configurer l'UE pour surveiller un canal de commande de liaison descendante physique, PDCCH, pour une cellule de desserte selon deux formats d'informations de commande de liaison descendante, DCI, sans repli ;
la réception (602), depuis le nœud de réseau, d'informations pour configurer l'UE avec une pluralité de paramètres de couche supérieure indiquant l'activation d'une table de schéma de modulation et de codage, MCS, 256-QAM, pour la cellule de desserte ;
la détection (604) d'un format DCI des deux formats DCI sans repli planifiant un canal partagé de liaison descendante physique, PDSCH, pour la cellule de desserte, dans lequel le format DCI comprend un indice MCS ;
la détermination (606) d'une taille de bloc de transport, TBS, correspondant au PDSCH à l'aide de l'indice MCS et de la table MCS 256-QAM ;
la détermination (608) d'une taille de bloc de référence pour une adaptation de débit à tampon limité, LBRM, pour un bloc de transport sur le PDSCH sur la base d'un ordre de modulation de référence basé sur la pluralité de paramètres de couche supérieure associés aux deux formats DCI sans repli ;
la réception (610) du PDSCH sur une partie de bande passante, BWP, de liaison descendante, DL ; et
le décodage (612) du PDSCH sur la base de la TBS déterminée et de la taille de bloc de référence déterminée pour la LBRM.

8. Procédé selon la revendication 7, dans lequel :
un premier paramètre de la pluralité de paramètres de couche supérieure est associé à un premier format DCI sans repli des deux formats DCI sans repli ; et
un deuxième paramètre de la pluralité de paramètres de couche supérieure est associé à un deuxième format DCI sans repli des deux formats DCI sans repli.

9. Procédé selon la revendication 8, dans lequel la pluralité de paramètres de couche supérieure comprend un paramètre mcs-Table et un paramètre mcs-TableForDCI-Format1-2-r16.

10. Equipement utilisateur, UE, (1100) adapté pour :
recevoir (600), depuis un nœud de réseau (800), des informations pour configurer l'UE pour surveiller un canal de commande de liaison descendante physique, PDCCH, pour une cellule de desserte selon deux formats d'informations de commande de liaison descendante, DCI, sans repli ;
recevoir (602), depuis le nœud de réseau, des informations pour configurer l'UE avec une pluralité de paramètres de couche supérieure indiquant une activation d'une table de schéma de modulation et de codage, MCS, de modulation d'amplitude en quadrature de constellation à 256 états, 256-QAM, pour la cellule de desserte ;
détecter (604) un format DCI des deux formats DCI sans repli planifiant un canal partagé de liaison descendante physique, PDSCH, pour la cellule de desserte, dans lequel le format DCI comprend un indice MCS ;
déterminer (606) une taille de bloc de transport, TBS, correspondant au PDSCH à l'aide de l'indice MCS et de la table MCS 256-QAM ;
déterminer (608) une taille de bloc de référence pour une adaptation de débit à tampon limité, LBRM, pour un bloc de transport sur le PDSCH sur la base d'un ordre de modulation de référence basé sur la pluralité de paramètres de couche supérieure associés aux deux formats DCI sans repli ;
recevoir (610) le PDSCH sur une partie de bande passante, BWP, de liaison descendante, DL ; et
décoder (612) le PDSCH sur la base de la TBS déterminée et de la taille de bloc de référence déterminée pour la LBRM.

11. UE selon la revendication 10, dans lequel l'UE est en outre adapté pour réaliser le procédé selon l'une quelconque des revendications 8 et 9.
